Europäisches Patentamt

**European Patent Office**

Office européen des brevets

(19)

(11) Numéro de publication: **0 288 333 B1**

(12) **FASCICULE DE BREVET EUROPEEN**

(45) Date de publication du fascicule du brevet:
**27.06.90**

(21) Numéro de dépôt: **88400559.6**

(22) Date de dépôt: **10.03.88**

(51) Int. Cl.⁵: **G01P 21/02**, G01R 19/165, B60T 8/00

(54) **Procédé et dispositif de vérification de l'état de fonctionnement d'un capteur magnétique à reluctance variable et leur application en électronique automobile.**

(30) Priorité: **20.03.87 FR 8703877**

(43) Date de publication de la demande:
**26.10.88 Bulletin 88/43**

(45) Mention de la délivrance du brevet:
**27.06.90 Bulletin 90/26**

(84) Etats contractants désignés:
**DE ES FR GB IT**

(56) Documents cités:
**DE-A- 2 556 257**
**US-A- 3 676 765**
**US-A- 3 976 954**

**PATENT ABSTRACTS OF JAPAN,**
**vol. 10, no. 149 (P-461)[2206], 30 mai 1986; &**
**JP-A-61 3067 (HITACHI SEISAKUSHO K.K.) 09-01-1986**

(73) Titulaire: **BENDIX France Société Anonyme dite:,**
**126, rue de Stalingrad, F-93700 Drancy(FR)**

(72) Inventeur: **Garnault, Joel, 106 rue Lieutenant Keiser,**
**F-95110 Sannois(FR)**

(74) Mandataire: **Lejet, Christian et al, BENDIX FRANCE**
**Division Technique Service Brevets Bendix**
**Europe 126 rue de Stalingrad, F-93700 Drancy(FR)**

ACTORUM AG

## Description

La présente invention est relative à un procédé et à un dispositif de vérification de l'état de fonctionnement d'un capteur magnétique à reluctance variable. Plus particulièrement, l'invention est aussi relative à l'application de ce procédé et de ce dispositif en électronique automobile.

En électronique automobile, on utilise couramment des capteurs à reluctance variable pour mesurer la vitesse de rotation d'arbres tel qu'un arbre de roue de véhicule ou un arbre de sortie d'un moteur propulsant ce véhicule, un calculateur numérique exploitant les valeurs de vitesse mesurées pour élaborer des signaux de commande, d'un dispositif d'antiblocage de roue par exemple.

Ces calculateurs exploitant des signaux numériques, il convient donc de convertir le signal analogique quasi sinusoïdal fourni par un capteur à reluctance variable en impulsions logiques assimilables par les calculateurs. Pour ce faire, on forme couramment à l'aide d'un comparateur une suite d'impulsions associées à des alternances du signal quasi sinusoïdal formé par le capteur, le comptage de ces impulsions par le calculateur permettant d'atteindre la vitesse de l'arbre.

L'amplitude du signal quasi sinusoïdal fourni par un capteur à reluctance variable est fonction de la vitesse de rotation de l'arbre et aussi de la largeur d'entrefer, c'est-à-dire de la distance qui sépare le capteur d'un disque denté tournant avec l'arbre, distance fixée par un réglage mécanique. Quand cette distance s'accroît, l'amplitude du signal décroît, à vitesse constante. Cette décroissance peut rendre le signal inexploitable. Or, dans certains environnements difficiles, tels que celui du moteur d'un véhicule automobile, des vibrations peuvent modifier le réglage de cette distance, par desserage du moyen de fixation du capteur par exemple. Il convient donc de pouvoir vérifier périodiquement que la largeur d'entrefer n'est pas telle qu'elle empêche la fourniture d'un signal exploitable par le capteur. Une vérification par des moyens mécaniques de mesure classiques tels que jauges, cales d'espacement, etc, n'est pas praticable dans l'application mentionnée ci-dessus du fait de la difficulté d'accès au capteur et du caractère périodique et fréquent de cette vérification, qui rendrait celle-ci coûteuse.

En outre, l'affaiblissement du signal du capteur peut aussi résulter d'un court-circuit partiel de son bobinage électrique, ou d'un voile de la roue dentée liée à l'arbre surveillé. Il convient que les conséquences de tels dommages puissent être perçues par une vérification périodique de l'amplitude du signal délivré par le capteur.

La présente invention a donc pour but de fournir un procédé et de réaliser un dispositif permettant de telles vérifications par des moyens purement électroniques, propres à être mis en oeuvre automatiquement par des moyens numériques de calcul exploitant l'information de vitesse contenue dans le signal délivré par le capteur.

On atteint ce but de l'invention avec un procédé de vérification de l'état de fonctionnement d'un capteur magnétique à reluctance variable utilisé pour mesurer la vitesse d'un mobile, ce capteur fournissant un signal électrique quasi sinusoïdal qui alimente un comparateur à seuil réglable fournissant des impulsions électriques dont la fréquence est représentative de la vitesse du mobile, procédé caractérisé en ce qu'on compare la vitesse détectée à une gamme de vitesses prédéterminée, on règle le seuil du comparateur à une valeur du test si la vitesse détectée se situe dans cette gamme, cette valeur de test étant supérieure à la valeur du seuil du capteur en fonctionnement normal, et on déduit l'existence d'un défaut de fonctionnement du capteur de la non production éventuelle d'un signal par le comparateur lorsque la valeur de seuil du comparateur est réglée à la valeur de test.

Pour la mise en oeuvre de ce procédé l'invention permet de réaliser un dispositif, comprenant un comparateur à seuil réglable alimenté différentiellement par un capteur à reluctance variable délivrant un signal quasi sinusoïdal représentatif de la vitesse du mobile, ce comparateur formant un train d'impulsions dont la fréquence est fonction de la vitesse du mobile, ce dispositif étant caractérisé en ce qu'il comprend des moyens de détermination de la position de la fréquence instantanée du signal de sortie du comparateur par rapport à une gamme de fréquence prédéterminée, des moyens de réglage de la valeur du seuil du comparateur à une valeur de test supérieure à la valeur du seuil en fonctionnement normal, en réponse à un signal de commande validé par la présence de la fréquence instantanée du signal de sortie du comparateur dans la gamme de fréquences prédéterminée, et des moyens de signalisation sensibles à la non production de signaux par le comparateur à seuil fonctionnant à la valeur de test, pour délivrer un signal significatif d'un défaut de fonctionnement du capteur.

Dans son application en électronique automobile, le dispositif suivant l'invention est associé ou incorporé à un calculateur exploitant le signal fourni par le comparateur pour réaliser des calculs prenant en compte la vitesse de rotation d'un organe tournant formant partie d'un véhicule automobile, l'exécution de ces calculs étant subordonnée à la validation du signal représentatif de la vitesse de l'organe, à la suite de l'émission par le calculateur du signal de commande des moyens de réglage à la valeur de test du seuil du comparateur du dispositif.

Au dessin annexé, donné seulement à titre d'exemple :

La figure 1 est un organigramme qui illustre l'algorithme mis en oeuvre par le procédé suivant l'invention et,

La figure 2 représente schématiquement un mode de réalisation du dispositif suivant l'invention.

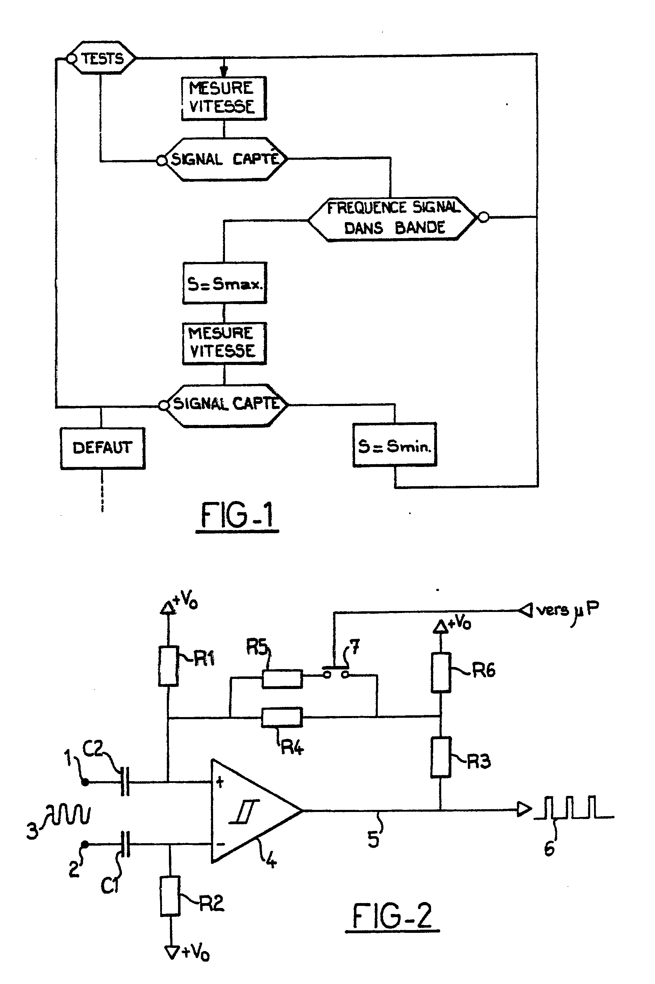

On se réfère tout d'abord à la figure 2 où le dispositif représenté est alimenté entre des bornes 1 et 2 par un signal 3 délivré par un capteur à reluctance variable. Dans l'application en électronique automobile mentionnée plus haut, un tel capteur est associé à une roue dentée tournant coaxialement avec l'arbre dont on souhaite mesurer la vitesse de rotation. Au cours de la rotation du disque, il y a variation de l'entrefer capteur-roue dentée du fait de la présence de ces dents et le signal délivré par le capteur présente une allure quasi sinusoïdale. Ce signal 3 alimente différentiellement les entrées inverseuse et non inverseuse d'un comparateur à seuil 4 constitué, par exemple, par un amplificateur opérationnel monté en comparateur. Des condensateurs C1 et C2 assurent une liaison capacitive entre la sortie du capteur et les entrées du comparateur 4. L'alimentation différentielle du comparateur est complétée par un pont de résistances $R_1$, $R_2$ connectées respectivement à l'entrée non inverseuse et à l'entrée inverseuse du comparateur, les autres bornes des résistances $R_1$, $R_2$ étant connectées à une source de tension de polarisation $+V_0$ comme cela est classique pour une alimentation différentielle. La sortie 5 du comparateur 4 délivre un train d'impulsions 6 dont la fréquence est représentative de la fréquence du signal 3 fourni par le capteur, et donc de la vitesse de rotation de l'arbre surveillé. Cet arbre peut, par exemple, porter une roue d'un véhicule automobile. Dans cette application, la mesure de la vitesse de rotation d'une ou plusieurs roues du véhicule peut être exploitée pour en déduire une commande appropriée d'un dispositif d'antiblocage des roues du véhicule.

Suivant l'invention, le comparateur 4 utilisé est à seuil réglable. Pour ce faire on peut, par exemple, faire varier la valeur de la résistance d'un circuit de réaction constitué de résistances R3, R4, R5, ce circuit de réaction étant connecté entre la sortie 5 du comparateur et son entrée non inverseuse. On notera que le dispositif comprend encore une résistance R6 connectée en série avec la résistance R3, entre la sortie 5 du comparateur et la source de tension $+V_0$. Suivant la présente invention, le dispositif comprend des moyens de réglage constitués par la résistance R5, un organe de commutation 7 placé en série avec cette résistance R5 aux bornes de la résistance R4, et une source d'un signal de commande de cet organe de commutation, pour régler la valeur du seuil du comparateur 4 à une valeur de test différente de la valeur de seuil utilisée en fonctionnement normal du comparateur. En fonctionnement normal, celui-ci délivre simplement un train d'impulsions 6 propre à un traitement par des moyens numériques de calcul, ce train d'impulsions étant représentatif de la vitesse de rotation de l'arbre surveillé. Le signal de commande ferme l'organe de commutation 7 ce qui a pour effet de connecter en parallèle la résistance R5 sur la résistance R4, ensemble dont la résistance équivalente est de valeur évidemment différente de celle de la résistance R4 seule. La valeur de seuil établie par la résistance R4 seule en circuit est égale à une valeur prédéterminée $S_{min}$ alors que la valeur de seuil établie lorsque la résistance R5 est en circuit correspond à une valeur de test $S_{max}$ supérieure à la valeur $S_{min}$. On expliquera l'intérêt de cette disposition dans la suite, en liaison avec la description du procédé suivant l'invention.

On se réfère à la figure 1 du dessin annexé où on a représenté un organigramme illustrant l'algorithme dont l'exécution permet la mise en oeuvre du procédé de vérification de l'état de fonctionnement du capteur suivant l'invention. La mesure de la vitesse de rotation de l'arbre surveillé étant réalisée alors que le seuil du comparateur 4 est réglé à la valeur $S_{min}$, l'absence de signal en sortie 5 du comparateur peut être interprétée comme découlant de l'absence du signal 3 en sortie du capteur ou, plus généralement, de l'insuffisance de l'amplitude de ce signal 3. Une telle amplitude insuffisante peut découler par exemple d'un entrefer supérieur à la valeur nominale, d'un court-circuit d'une partie du bobinage du capteur, d'une prémagnétisation ou même d'un voile de la roue dentée qui tourne en face du capteur. Elle peut résulter aussi d'une vitesse insuffisante du mobile, impropre à la fourniture par le capteur d'un signal d'amplitude supérieure au seuil du comparateur.

Des tests sont alors réalisés pour déterminer s'il est possible qu'une vitesse insuffisante du mobile puisse être responsable de l'absence du signal. Si ce n'est pas le cas, des moyens de signalisation alertent les moyens de calcul et, éventuellement, un organe d'affichage permettant au conducteur du véhicule d'être tenu au courant de la défaillance du capteur utilisé.

Dans le cas contraire, la procédure illustrée par l'organigramme est reprise à son début jusqu'à l'apparition d'un signal à la sortie du comparateur. Pratiquement cela correspond à la situation dans laquelle la vitesse du mobile s'accroît à partir d'une valeur nulle, jusqu'à atteindre celle qui correspond à la valeur de seuil du comparateur.

Si, alors, on observe la production d'un train d'impulsions correct en sortie du comparateur, le seuil de ce comparateur étant réglé à la valeur $S_{min}$, on ne peut en déduire pour autant que le capteur fonctionne correctement. En effet, par exemple, la production d'un signal d'amplitude suffisante par le capteur peut résulter d'une rotation de l'arbre à une vitesse supérieure à la gamme de vitesses dans laquelle on souhaite mesurer la vitesse de rotation de l'arbre, puisqu'on sait que l'amplitude du signal fournie par le capteur est non seulement fonction de la largeur d'entrefer capteur-disque denté mais aussi de la vitesse de rotation de l'arbre. Il convient donc de vérifier que le fonctionnement du capteur est correct dans la gamme de vitesses utile de l'application considérée.

Pour ce faire, on compare la fréquence du signal de sortie du capteur à la bande de fréquence correspondant à la gamme de vitesse utile. Si la fréquence du signal n'est pas incluse dans cette bande, on recommence la mesure de manière à opérer celle-ci alors que la vitesse de l'arbre se situe dans la gamme de vitesses considérée. Si par contre la fréquence du signal est bien incluse dans la bande utile, on règle suivant l'invention le seuil du capteur à la valeur $S_{max}$, supérieure à la valeur $S_{min}$, pour tester le fonctionnement du dispositif avec cette nouvelle valeur de seuil. Si la mesure de vitesse est encore possible, et que l'on recueille par conséquent un signal sur la sortie du capteur, on en déduit que l'amplitude du signal fourni par le capteur, dans la gamme de vitesses considérée, est suffisante pour être considérée comme représentative d'un état de fonctionnement correct du capteur. On peut alors faire basculer de nouveau le seuil du capteur à la valeur Smin et reprendre les mesures courantes de vitesses. Si par contre, le seuil du comparateur étant réglé à la valeur de test, on observe une disparition du signal en sortie du comparateur 4, on en déduit que l'amplitude du signal délivré par le capteur est insuffisante pour fournir des mesures correctes dans la gamme de vitesses considérée. Cette amplitude insuffisante est significative d'un défaut de fonctionnement du capteur, défaut résultant par exemple d'un élargissement exagéré de l'entrefer, d'un court-circuit au moins partiel du bobinage du capteur, d'une prémagnétisation ou d'un voile de la roue dentée, etc. Le défaut est signalé aux moyens de calcul associés au dispositif suivant l'invention, pour que ces moyens de calcul prennent en compte la défaillance du capteur. Un organe d'affichage peut être également actionné pour signaler l'existence du défaut au conducteur du véhicule. Celui-ci est alors alerté de la nécessité d'opérer un entretien du capteur propre à assurer le bon fonctionnement du dispositif de mesure.

Dans l'application envisagée ci-dessus, pour laquelle un calculateur exploite des mesures de vitesses de roues d'un véhicule pour commander un dispositif d'antiblocage de ces roues, le signal de commande qui déclenche la fermeture de l'organe de commutation 7 et l'exécution d'une vérification de l'état de fonctionnement d'un capteur peut être engendré par le calculateur lui-même, en préparation de calculs faisant intervenir ces vitesses, pour s'assurer de la validité des mesures de celles-ci. L'organe de commutation peut alors être constitué par un commutateur analogique à commande numérique, du type 4066 par exemple, commandé par un signal fourni par un microprocesseur μP formant partie du calculateur.

En pratique, le signal délivré par le capteur peut être affecté de divers bruits susceptibles de perturber le fonctionnement du comparateur. Pour filtrer ces bruits, il est commode d'utiliser un comparateur à hystérésis.

Bien entendu, on ne sortirait pas du cadre de l'invention en prévoyant la mise en circuit de plusieurs résistances différentes associées chacune à une valeur de seuil différente, ceci au prix d'une réalisation moins économique du dispositif suivant l'invention. Par contre, une telle disposition permettrait d'obtenir une véritable mesure de l'amplitude du signal analogique fourni par le capteur et non pas seulement la position de cette amplitude par rapport à une valeur d'amplitude déterminée.

On pourrait aussi corriger la valeur de test du seuil du comparateur en fonction de la vitesse instantanée du mobile pour éviter la comparaison de cette vitesse à la gamme de vitesses utile, au prix d'une complexité légèrement accrue du dispositif suivant l'invention.

D'une manière générale la présente invention trouve application à la conversion d'un signal analogique en un signal logique et, plus particulièrement, au traitement du signal délivré par un capteur magnétique de vitesse à reluctance variable sans que cette application soit limitative. L'invention s'étend en effet à l'établissement d'un diagnostic ou d'une mesure sur l'amplitude du signal analogique périodique traité par un dispositif convertisseur de ce signal en signaux logiques, par modification commandée du seuil d'un comparateur utilisé pour cette conversion.

**Revendications**

1. Procédé de vérification de l'état de fonctionnement d'un capteur magnétique à reluctance variable utilisé pour mesurer la vitesse d'un mobile, ce capteur fournissant un signal électrique quasi sinusoïdal qui alimente un comparateur à seuil réglable fournissant des impulsions électriques dont la fréquence est représentative de la vitesse du mobile, procédé carctérisé en ce qu'on compare la vitesse détectée à une gamme de vitesses prédéterminée, on règle le seuil du comparateur à une valeur de test si la vitesse détectée se situe dans cette gamme, cette valeur de test étant supérieure à la valeur du seuil du capteur en fonctionnement normal, et on déduit l'existence d'un défaut de fonctionnement du capteur de la non production éventuelle d'un signal par le comparateur lorsque la valeur de seuil du comparateur est réglée à la valeur de test.

2. Procédé conforme à la revendication 1, caractérisé en ce qu'on règle le seuil successivement à une suite de valeurs de test étagées pour déduire de la production et de la non production d'impulsions pour deux valeurs successives, une évaluation de l'amplitude du signal délivré par le capteur.

3. Dispositif pour la mise en oeuvre du procédé conforme à la revendication 1, comprenant un comparateur à seuil réglable alimenté différentiellement par un capteur à reluctance variable délivrant un signal représentatif de la vitesse d'un mobile, le comparateur formant un train d'impulsions dont la fréquence est fonction de la viatesse du mobile, ce dispositif étant caractérisé en ce qu'il comprend des moyens de détermination de la position de la fréquence instantanée du train d'impulsions, par rapport à une gamme de fréquences prédéterminée, des moyens de réglage de la valeur du seuil du comparateur à une valeur de test supérieure à la valeur de seuil en fonctionnement normal, en réponse à un signal de commande validé par la présence de la fréquence instantanée du train d'impulsions dans la gamme de fréquences prédéterminée, et des moyens de signalisation sensibles à la non production d'impulsions par le comparateur à seuil fonctionnant à la valeur de test, pour délivrer un signal significatif d'un défaut de fonctionnement du capteur.

4. Dispositif conforme à la revendication 3, dans lequel le comparateur à seuil est constitué par un amplificateur opérationnel monté en comparateur, caractérisé en ce que les moyens de réglage de la valeur de seuil du comparateur agissent sur la valeur de l'impédance d'un circuit de réaction branché entre une entrée et la sortie du comparateur, le comparateur étant couplé capacitivement au capteur.

5. Dispositif conforme à la revendication 4, caractérisé en ce que les moyens de réglage comprennent un organe de commutation placé en série avec une résistance de réglage de la valeur de seuil, l'ensemble étant connecté en parallèle sur une résistance formant partie du circuit de réaction.

6. Dispositif conforme à la revendication 5, caractérisé en ce que l'organe de commutation est un commutateur analogique à commande numérique sensible à un signal de commande pour connecter la résistance de réglage de la valeur de test dans le circuit de réaction.

7. Dispositif conforme à l'une quelconque des revendications 3 à 6, caractérisé en ce que le comparateur est un comparateur à hystérésis.

8. Application du dispositif conforme à l'une quelconque des revendications 5 à 7, à un calculateur numérique exploitant le signal fourni par le comparateur pour réaliser des calculs prenant en compte la vitesse du mobile, caractérisé en ce que l'exécution de ces calculs est subordonnée à la validation du signal représentatif de la vitesse du mobile, à la suite de l'émission par le calculateur du signal de commande de l'organe de commutation.

9. Application conforme à la revendication 8, caractérisée en ce que le calculateur est conçu pour équiper un véhicule automobile, ce calculateur étant sensible à la vitesse d'au moins un arbre tournant du véhicule, détectée par un capteur à reluctance variable.

10. Application conforme à la revendication 9, caractérisée en ce que l'arbre tournant porte une roue du véhicule.

**Claims**

1. Process for checking the operational state of a variable reluctance magnetic sensor used for measuring the speed of a moving object, this sensor providing a quasi-sinusoidal electrical signal which feeds an adjustable threshold comparator supplying electrical pulses whose frequency represents the speed of the moving object, this process being characterized in that the detected speed is compared with a predetermined range of speeds, the threshold of the comparator is adjusted to a test value if the detected speed is located within this range, this test value being higher than the threshold value of the sensor in normal operation, and the existence of a functional fault in the sensor is detected by the possible non-production of a signal by the comparator when the value of the threshold of the comparator is adjusted to the test value.

2. Process according to claim 1, characterized in that the threshold is successively adjusted to a series of staged test values in order to deduce from the production and from the non-production of pulses for two successive values, an evaluation of the amplitude of the signal delivered by the sensor.

3. Device for the implementation of the process according to claim 1, including an adjustable threshold comparator differentially fed by a variable reluctance sensor delivering a signal representing the speed of the moving body, the comparator forming a train of pulses whose frequency depends on the speed of the moving body, this device being characterized in that it includes means for determining the position of the instantaneous frequency of the train of pulses with respect to a predetermined frequency range, means for adjusting the threshold value of the comparator to a test value higher than the threshold value in normal operation, in response to a control signal validated by the presence of the instantaneous frequency of the train of pulses within the predetermined frequency range, and signalling means sensitive to the non-production of pulses by the threshold comparator functioning at the test value, in order to deliver a signal signifying an operational fault in the sensor.

4. Device according to claim 3, in which the threshold comparator is constituted by an operational amplifier connected as a comparator, characterized in that the means for adjusting the value of the threshold of the comparator act on the value of the impedance of a feedback circuit connected between an input and the output of the comparator, the comparator being capacitively coupled to the sensor.

5. Device according to claim 4, characterized in that the means for adjusting include a switching device placed in series with a resistor for adjusting the threshold value, the assembly being connected in parallel with a resistor forming part of the feedback circuit.

6. Device according to claim 5, characterized in that the switching device is a digitally controlled analog switch sensitive to a control signal for connecting the test value adjustment resistor into the feedback circuit.

7. Device according to any of claims 3 to 6, characterized in that the comparator is a hysteresis comparator.

8. Application of the device according to any of claims 5 to 7 to a digital computer making use of the signal provided by the comparator in order to carry out computations taking into account the speed of the moving body, characterized in that the execution of these computations is subordinate to the validation of the signal representing the speed of the moving body, following the transmission by the computer of the switching device control signal.

9. Application according to claim 8, characterized in that the computer is designed to be fitted to an automobile vehicle, this computer being sensitive to the speed of at least one rotating shaft of the vehicle, detected by a variable reluctance sensor.

10. Application according to claim 9, characterized in that the rotating shaft carries a wheel of the vehicle.

**Patentansprüche**

1. Verfahren zur Kontrolle des Funktionszustandes eines für die Messung der Geschwindigkeit eines beweglichen Körpers verwendeten Magnetfühlers mit variabler Reluktanz, wobei dieser Fühler ein fast sinusförmiges elektrisches Signal abgibt, das einen einstellbaren Schwellenkomparator speist, der elektrische Impulse abgibt, deren Frequenz für die Geschwindigkeit des beweglichen Körpers repräsentativ ist, wobei das Verfahren dadurch gekennzeichnet ist, daß die erfaßte Geschwindigkeit mit einem vorgegebenen Geschwindigkeitsbereich verglichen wird, die Schwelle des Komparators auf einen Testwert eingestellt wird, wenn die erfaßte Geschwindigkeit in diesem Bereich liegt, wobei dieser Testwert höher als der Schwellenwert des Fühlers in normaler Betriebsweise ist, und auf das Vorhandensein eines Funktionsfehlers des Fühlers geschlossen wird, wenn kein Signal durch den Komparator erzeugt wird und wenn der Schwellenwert des Komparators auf den Testwert eingestellt ist.

2. Verfahren nach Anspruch 1, dadurch gekennzeichnet, daß der Schwellenwert nach und nach gemäß einer abgestuften Testwertfolge eingestellt wird, um aus der Erzeugung oder Nicht-Erzeugung von Impulsen für zwei aufeinanderfolgende Werte eine Schätzung der Amplitude des vom Fühler abgegebenen Signals abzuleiten.

3. Vorrichtung für die Anwendung des Verfahrens nach Anspruch 1, umfassend einen einstellbaren Schwellenkomparator, der differentiell von einem Fühler mit variabler Reluktanz gespeist wird, der ein für die Geschwindigkeit eines beweglichen Körpers repräsentatives Signal abgibt, wobei der Komparator einen Impulszug bildet, dessen Frequenz von der Geschwindigkeit des beweglichen Körpers abhängt, und diese Vorrichtung dadurch gekennzeichnet ist, daß sie Mittel für die Bestimmung der Lage der Augenblicksfrequenz des Impulszugs in bezug auf einen vorgegebenen Frequenzbereich enthält, Mittel für die Einstellung des Schwellenwerts des Komparators auf einen Testwert, der höher als der Schwellenwert in normaler Betriebsweise ist, als Antwort auf ein Steuersignal, das durch das Vorhandensein der Augenblicksfrequenz des Impulszugs in dem vorgegebenen Frequenzbereich freigegeben ist, sowie Mittel für die Signalabgabe, die auf die Nicht-Erzeugung von Impulsen durch den beim Testwert funktionierenden Schwellenkomparator ansprechen, um ein einen Funktionsfehler des Fühlers bezeichnendes Signal abzugeben.

4. Vorrichtung nach Anspruch 3, in welcher der Schwellenkomparator aus einem als Komparator geschalteten Operationsverstärker besteht, dadurch gekennzeichnet, daß die Mittel zur Einstellung des Schwellenwerts des Komparators auf den Wert der Impedanz eines Rückkopplungskreises einwirken, der zwischen einem Eingang und dem Ausgang des Komparators angeschlossen ist, wobei der Komparator kapazitiv an den Fühler gekoppelt ist.

5. Vorrichtung nach Anspruch 4, dadurch gekennzeichnet, daß die Einstellmittel ein Schaltorgan enthalten, das mit einem Widerstand zur Einstellung des Schwellenwertes in Serie geschaltet ist, wobei das Ganze parallel zu einem zum Rückkopplungskreis gehörenden Widerstand geschaltet ist.

6. Vorrichtung nach Anspruch 5, dadurch gekennzeichnet, daß das Schaltorgan ein Analogschalter mit digitaler Steuerung ist, der auf ein Steuersignal anspricht, um den Einstellwiderstand für den Testwert in den Rückkopplungskreis zu schalten.

7. Vorrichtung nach einem der Ansprüche 3 bis 6, dadurch gekennzeichnet, daß der Komparator ein Hysteresiskomparator ist.

8. Anwendung der Vorrichtung nach einem der Ansprüche 5 bis 7 auf einen Digitalrechner, der das vom Komparator abgegebene Signal auswertet, um die Geschwindigkeit des beweglichen Körpers berücksichtigende Berechnungen durchzuführen, dadurch gekennzeichnet, daß infolge der Abgabe des Steuersignals des Schaltorgans durch den Rechner die Durchführung dieser Berechnungen der Freigabe des für die Geschwindigkeit des beweglichen Körpers repräsentativen Signals untergeordnet ist.

9. Anwendung nach Anspruch 8, dadurch gekennzeichnet, daß der Rechner für die Ausrüstung eines Kraftfahrzeugs ausgelegt ist, wobei dieser Rechner für die von einem Fühler mit variabler Reluktanz erfaßte Geschwindigkeit mindestens einer Drehwelle des Fahrzeugs empfindlich ist.

10. Anwendung nach Anspruch 9, dadurch gekennzeichnet, daß die Drehwelle ein Rad des Fahrzeugs trägt.

EP 0 288 333 B1

FIG-1

FIG-2